# EUROPÄISCHE PATENTSCHRIFT

(11) **EP 3 765 765 B1**
(45) Veröffentlichungstag und Bekanntmachung des Hinweises auf die Patenterteilung: **25.06.2025**
(21) Anmeldenummer: 19707692.0
(22) Anmeldetag: 12.02.2019
(51) Int. Cl.: F16F 15/14

(54) **FLIEHKRAFTPENDELEINRICHTUNG MIT EINER TELLERFEDER ZUR ERZEUGUNG EINES REIBWIDERSTANDES; KUPPLUNGSSCHEIBE SOWIE ANTRIEBSSTRANG**
CENTRIFUGAL PENDULUM DEVICE WITH A DIAPHRAGM SPRING FOR GENERATING FRICTIONAL RESISTANCE; CLUTCH PLATE; AND POWERTRAIN
DISPOSITIF PENDULAIRE À FORCE CENTRIFUGE DOTÉE D'UNE RONDELLE BELLEVILLE POUR GÉNÉRER UNE RÉSISTANCE À LA FRICTION; DISQUE D'EMBRAYAGE ET CHAÎNE CINÉMATIQUE

(30) Priorität: 13.03.2018 DE 102018105743
(43) Veröffentlichungstag der Anmeldung: 20.01.2021
(73) Patentinhaber: Schaeffler Technologies AG & Co. KG, 91074 Herzogenaurach (DE)
(72) Erfinder: FRANZ, Evgenij, 76437 Rastatt (DE); RUSCH, Alain, 67760 Gambsheim (FR); MATTES, Julian, 78600 Kolbingen (DE); REUTER, Björn, 77815 Bühl (DE)
(86) Internationale Anmeldenummer: PCT/DE2019/100139
(87) Internationale Veröffentlichungsnummer: WO 2019/174665

(56) Entgegenhaltungen:
- WO-A1-2015/192846
- WO-A1-2018/161992
- DE-A1- 102017 114 821
- US-A- 4 657 124

## Beschreibung

Die Erfindung betrifft eine Fliehkraftpendeleinrichtung (auch verkürzt als Fliehkraftpendel bezeichnet) für einen Antriebsstrang eines Kraftfahrzeuges, wie eines Pkws, Lkws, Busses oder sonstigen Nutzfahrzeuges, mit einem um eine Drehachse drehbaren Träger, einer an dem Träger entlang einer Kulissenbahn pendelbar aufgenommenen Pendelmasse, wobei durch die Pendelmasse im Betrieb ein einer Drehungleichförmigkeit entgegen gerichtetes Rückstellmoment erzeugt ist, einem an der Pendelmasse anliegenden Kontaktelement, welches Kontaktelement (unmittelbar oder mittelbar) eingesetzt ist, einen eine Relativbewegung zwischen der Pendelmasse und dem Träger hemmenden Reibwiderstand zu erzeugen, sowie einer das Kontaktelement in einer axialen Richtung der Drehachse zu der Pendelmasse hin vorspannenden Federscheibe. Zudem betrifft die Erfindung eine Kupplungsscheibe für eine Reibkupplung eines Kraftfahrzeuges sowie einen Antriebsstrang für ein Kraftfahrzeug, jeweils aufweisend eine Fliehkraftpendeleinrichtung.

Ein prinzipieller Aufbau einer Fliehkraftpendeleinrichtung ist beispielsweise mit der DE 10 2013 203 694 A1 offenbart.

In der WO 2015 / 192 846 A1 ist eine Fliehkraftpendeleinrichtung offenbart, die auf den Oberbegriff des Anspruchs 1 lesbar ist, wobei pendelnd in einem Pendelflansch im Fliehkraftfeld eines drehenden Pendelflansches eingehängte Pendel axial gegenüber dem Pendelflansch vorgespannt sind, um harte Anschläge der Pendel am Pendelflansch zu verhindern.

Des Weiteren sind in der älteren, aber nicht vorveröffentlichten WO 2018 / 161 992 A1 Biegefedern offenbart, die als Wellscheiben ausgebildet sind.

Als Nachteil der aus dem Stand der Technik bekannten Ausführungen hat es sich jedoch herausgestellt, dass die eingesetzten Federscheiben zum Andrücken der entsprechenden Kontaktelemente an den Pendelmassen in ihrer Herstellung relativ aufwändig sind. Des Weiteren sind die Federscheiben derart ausgeformt und an dem Kontaktelement abgestützt, dass eine über den Umfang relativ ungleichmäßige Verteilung der Anpresskraft vorliegt. Häufig bringt die Federscheibe ihre Kraft mit nur einer Krafteinleitungszunge auf das Kontaktelement auf, sodass lokal eine relativ hohe Flächenpressung auf dem Kontaktelement entsteht. Dies kann zu einem erhöhten Verschleiß auf dem Kontaktelement führen.

Es ist daher Aufgabe der vorliegenden Erfindung, die aus dem Stand der Technik bekannten Nachteile zu beheben und insbesondere eine Fliehkraftpendeleinrichtung mit einem reduzierten Verschleiß zur Verfügung zu stellen.

Diese Aufgabe wird erfindungsgemäß durch eine Fliehkraftpendeleinrichtung gemäß Anspruch 1 gelöst, wobei die Federscheibe als eine mit mehreren Federzungen ausgestattete Tellerfeder ausgebildet ist.

Durch die Federzungen wird eine in Umfangsrichtung gleichmäßiger verteilte Anlage seitens des Kontaktelementes zur Verfügung gestellt. Dadurch wird die Kraftverteilung auf dem Kontaktelement verbessert und die maximale Flächenpressung reduziert. Ein möglichst gleichmäßig auf die Pendelmassen wirkender Reibwiderstand ist die Folge. Die Fliehkraftpendeleinrichtung ist dadurch deutlich langlebiger ausgeführt. Zudem ist die Tellerfeder in axialer Richtung besonders kompakt ausgebildet, sodass auch die Fliehkraftpendeleinrichtung ganzheitlich kompakt ausgebildet ist.

Weitere vorteilhafte Ausführungsformen sind mit den Unteransprüchen beansprucht und nachfolgend näher erläutert.

Erfindungsgemäß liegt die Tellerfeder in einem Umfangsbereich der Pendelmasse mit mehreren Federzungen an dem Kontaktelement an. Dadurch ist je Pendelmasse eine möglichst gleichbleibende Reibung erzeugt. In diesem Zusammenhang ist es insbesondere zweckmäßig, wenn mehrere, bevorzugt drei, Pendelmassen in einer Umfangsrichtung der Drehachse verteilt angeordnet sind und je Pendelmasse mehrere Federzungen der Tellerfeder an dem Kontaktelement (im Umfangsbereich der jeweiligen Pendelmasse) angedrückt / abgestützt sind / anliegen.

Ist die Tellerfeder in axialer Richtung der Drehachse gesehen zwischen einem ersten Trägerbereich des Trägers und der Pendelmasse angeordnet, ist die Tellerfeder besonders kompakt / bauraumsparend angeordnet. In anderen Worten ausgedrückt, ist die Tellerfeder somit teilweise (vorzugsweise zumindest mit ihren Federzungen) in einem (axialen) Spalt zwischen dem ersten Trägerbereich und der jeweiligen Pendelmasse / dem an der Pendelmasse anliegenden Kontaktelement angeordnet. Die Tellerfeder ragt weiter bevorzugt mit ihren Federzungen in radialer Richtung von innen (nach außen) in diesen (axialen Spalt) hinein. Dadurch wird der Bauraumbedarf weiter reduziert.

Für eine noch gleichmäßigere Andrückung des Kontaktelementes seitens der Pendelmasse ist es zudem zuträglich, wenn die (der jeweiligen Pendelmasse zugeordneten) Federzungen zumindest teilweise in ihrer Breite und/oder Länge unterschiedlich ausgebildet sind.

Ist das Kontaktelement unmittelbar axial zwischen mehreren Federzungen der Tellerfeder und der Pendelmasse eingesetzt, wird der Aufbau weiter vereinfacht.

Auch ist es von Vorteil, wenn das Kontaktelement unmittelbar als Reibelement ausgeführt ist. Dadurch wird der Aufbau besonders einfach gehalten.

Bevorzugt ist das Reibelement mit der Tellerfeder koaxial zu der Drehachse angeordnet. Das Reibelement ist bevorzugt ringförmig, d.h. als Reibring, realisiert. Auch der Reibbestandteil ist bevorzugt als Reibring / ringförmig ausgeformt und/oder koaxial zu der Drehachse angeordnet.

Vorteilhaft ist es weiterhin, wenn das Kontaktelement mehrere in axialer Richtung vorspringende Haltenasen aufweist, die unter drehfester Anordnung des Kontaktelementes relativ zu dem Träger an dem Träger abgestützt / aufgenommen sind. Die Aufnahme des Kontaktelementes wird dadurch weiter erleichtert.

Das Kontaktelement ist entweder aus einem Metallblech oder einem Kunststoffmaterial hergestellt.

Auch ist es zweckmäßig, wenn ein mit dem Kontaktelement in Wirkverbindung stehender Reibbestandteil an der Pendelmasse angebracht ist und an einem zweiten Trägerbereich des Trägers anliegt. Dadurch kann die Reibung seitens der Pendelmasse noch gleichmäßiger verteilt werden.

Diesbezüglich ist es zweckmäßig, wenn das Kontaktelement als Stützelement umgesetzt ist und mit dem Reibbestandteil, der unmittelbar den Reibwiderstand zwischen der Pendelmasse und dem Träger im Betrieb erzeugt, zusammenwirkt.

Alternativ ist es auch von Vorteil, wenn der weitere, mit dem Kontaktelement in Wirkverbindung stehende Reibbestandteil, wie auch das Kontaktelement, als Reibelement, vorzugsweise als ringförmiges Reibelement, d.h. als Reibring, ausgebildet ist. Der Reibbestandteil ist vorzugsweise auf einer dem Kontaktelement abgewandten axialen Seite der Pendelmasse (zwischen dem Träger und der Pendelmasse) eingesetzt / angeordnet. Auch dadurch wird die Reibung möglichst gleichmäßig erzeugt.

Weist die Tellerfeder Haltelaschen auf, die unter drehfester Anordnung der Tellerfeder relativ zu dem Träger an einem trägerfesten Bestandteil abgestützt / aufgenommen sind, ist die Tellerfeder stabil im Betrieb gehalten.

Des Weiteren betrifft die Erfindung eine Kupplungsscheibe für eine Reibkupplung eines Kraftfahrzeuges, die unmittelbar mit der erfindungsgemäßen Fliehkraftpendeleinrichtung nach zumindest einer der zuvor beschriebenen Ausführungen sowie einem mit dem Träger der Fliehkraftpendeleinrichtung drehfest verbundenen Reibelement ausgestattet ist. Die Fliehkraftpendeleinrichtung ist in diesem Zusammenhang bevorzugt mit einer Nabe bzw. einem Flansch der Kupplungsscheibe drehfest verbunden.

Auch betrifft die Erfindung einen Antriebsstrang für ein Kraftfahrzeug, mit dieser erfindungsgemäßen Fliehkraftpendeleinrichtung nach zumindest einer der zuvor beschriebenen Ausführungen, wobei der Träger der Fliehkraftpendeleinrichtung mit einer Triebwelle drehfest verbunden ist. Die Triebwelle ist weiter bevorzugt eine Ausgangswelle einer Verbrennungskraftmaschine oder eine Getriebeeingangswelle eines Getriebes.

In anderen Worten ausgedrückt, ist somit erfindungsgemäß eine Kupplungsscheibe mit Fliehkraftpendel, aufweisend eine Tellerfeder zur Beaufschlagung einer Reibeinrichtung (Kontaktelement zumindest aufweisend), ausgeführt. Erfindungsgemäß wird daher ein Zusammenbau aus Kupplungsscheibe und Fliehkraftpendel vorgeschlagen, wobei das Fliehkraftpendel an der Kupplungsscheibe befestigt ist bzw. in axialer Richtung innerhalb des Bauraums der Kupplung angeordnet ist und drehfest mit der Kupplungsscheibe über die Getriebeeingangswelle verbunden ist, wobei eine Tellerfeder mit mehreren, in Umfangsrichtung verteilt angeordneten Tellerfederzungen und durch diese beaufschlagten Kunststoffbereiche / -elemente (Kontaktelement und/oder Reibbestandteil) als Reibeinrichtungen zur Verringerung der Schwingwinkel der Pendelmasse vorgesehen ist. Da mehrere Tellerfederzungen pro Pendelmasse vorgesehen sind, können die Flächenpressungen verringert werden, wodurch der Verschleiß verringert werden kann. Gleichzeitig ist eine Verringerung des axialen Bauraums möglich, da die Tellerfeder auch nur auf einer Seite der Pendelmasse angeordnet sein kann.

Die Erfindung wird nun nachfolgend anhand von Figuren näher erläutert, in welchem Zusammenhang verschiedene Ausführungsbeispiele dargestellt sind.

Es zeigen:
- Fig. 1: eine Vorderansicht einer teilweise im Querschnitt geschnitten dargestellten erfindungsgemäßen Fliehkraftpendeleinrichtung nach einem ersten Ausführungsbeispiel, wobei der prinzipielle Aufbau der Fliehkraftpendeleinrichtung seitens mehrerer Pendelmassen in einem Träger erkennbar sind,
- Fig. 2: eine Längsschnittdarstellung der Fliehkraftpendeleinrichtung nach Fig. 1 entlang der in Fig. 1 mit "II-II" gekennzeichneten Schnittlinie, wobei ein Kontaktelement sowie ein Reibbestandteil, die durch eine Tellerfeder axial an die Pendelmasse angedrückt sind, erkennbar sind,
- Fig. 3: eine perspektivische Explosionsansicht der Fliehkraftpendeleinrichtung nach Fig. 1,
- Fig. 4: eine Längsschnittdarstellung der Fliehkraftpendeleinrichtung ähnlich zu Fig. 2, wobei der Übersichtlichkeit halber lediglich die Schnittflächen veranschaulicht sind,
- Fig. 5: eine Längsschnittdarstellung der Fliehkraftpendeleinrichtung entlang der in Fig. 1 mit "V-V" gekennzeichneten Schnittlinie, wobei eine verdrehgesicherte Anordnung der Tellerfeder an dem Träger erkennbar ist,
- Fig. 6: eine perspektivische Darstellung des in den Fign. 1 bis 5 eingesetzten Kontaktelementes von einer der Tellerfeder zugewandten axialen Seite,
- Fig. 7: eine Vorderansicht des Kontaktelementes nach Fig. 6,
- Fig. 8: eine Längsschnittdarstellung des Kontaktelementes entlang der in Fig. 7 mit "VIII-VIII" gekennzeichneten Schnittlinie,
- Fig. 9: eine Vorderansicht der in den Fign. 1 bis 5 eingesetzten Tellerfeder,
- Fig. 10: eine Seitenansicht der Tellerfeder nach Fig. 9,
- Fig. 11: eine perspektivische Darstellung der Tellerfeder,
- Fig. 12: eine perspektivische Darstellung des in den Fign. 1 bis 5 eingesetzten, mit dem Kontaktelement zusammenwirkenden Reibbestandteil,
- Fig. 13: eine Längsschnittdarstellung einer erfindungsgemäßen Fliehkraftpendeleinrichtung nach einem weiteren zweiten Ausführungsbeispiel, indem das Kontaktelement nun nicht mehr selbst als Reibelement, sondern als Stützelement dient, wobei der Übersichtlichkeit halber ausschließlich die Schnittflächen der geschnittenen Bestandteile dargestellt sind,
- Fig. 14: eine perspektivische Darstellung des in Fig. 13 als Stützelement umgesetzten Kontaktelementes,
- Fig. 15: eine Vorderansicht einer die erfindungsgemäße Fliehkraftpendeleinrichtung der Fign. 1 bis 5 aufweisenden Kupplungsscheibe, und
- Fig. 16: eine Seitendarstellung der Kupplungsscheibe nach Fig. 15.

Die Figuren sind lediglich schematischer Natur und dienen ausschließlich dem Verständnis der Erfindung. Die gleichen Elemente sind mit denselben Bezugszeichen versehen. Auch können die verschiedenen Merkmale der unterschiedlichen Ausführungsbeispiele frei miteinander kombiniert werden.

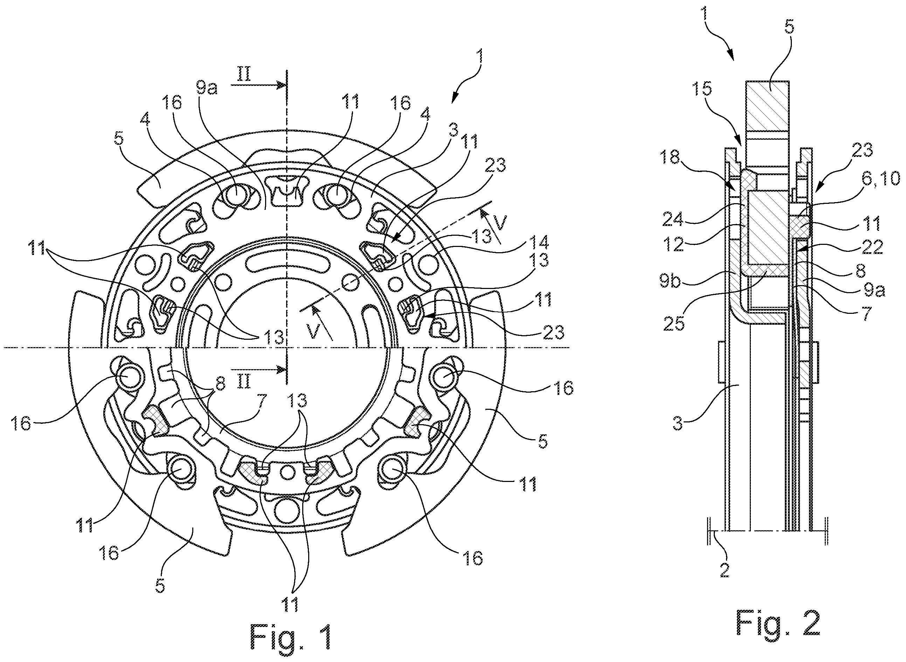

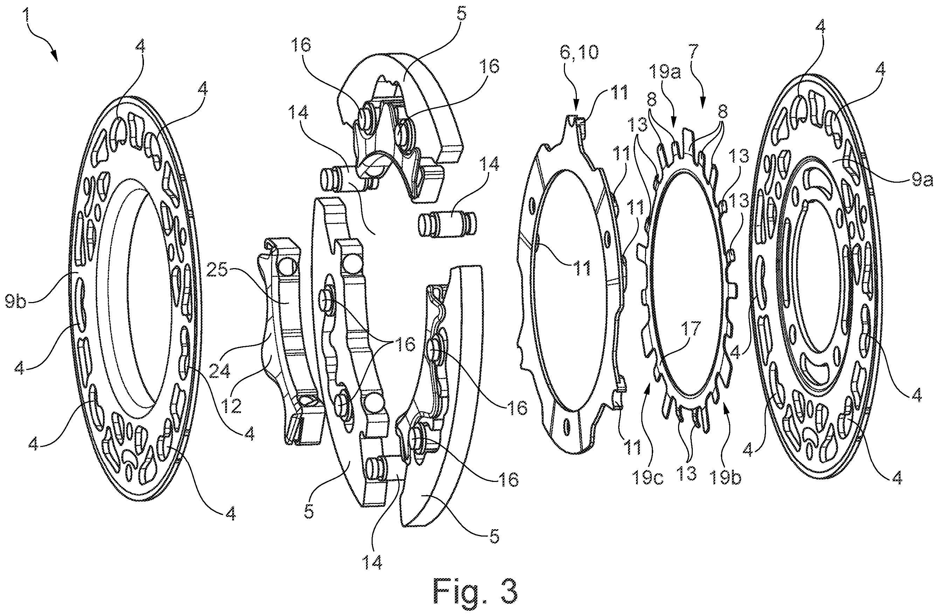

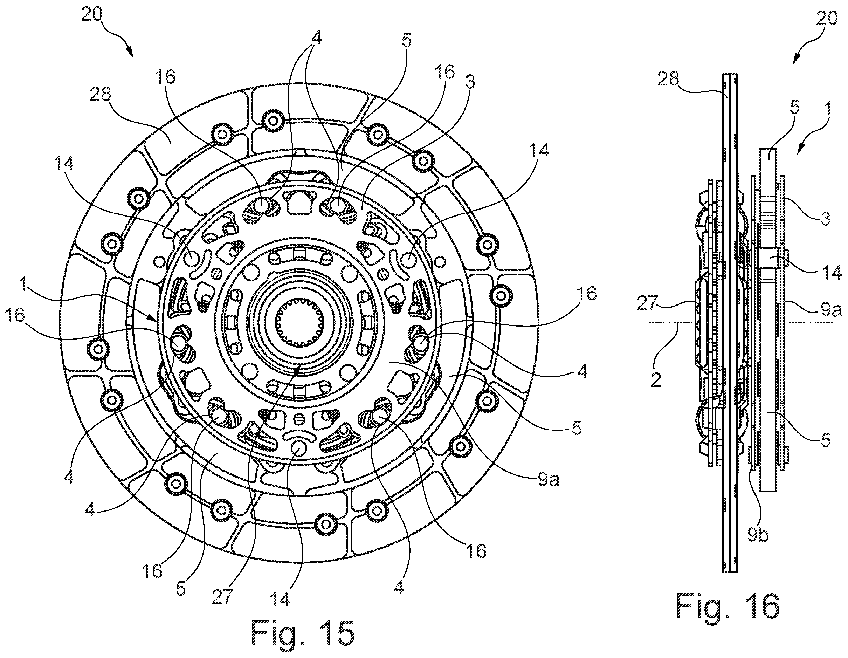

In den Fign. 1 bis 3 ist ein prinzipieller Aufbau der erfindungsgemäßen Fliehkraftpendeleinrichtung 1 nach einem ersten Ausführungsbeispiel zu erkennen. Die Fliehkraftpendeleinrichtung 1 ist in ihrem Betrieb bevorzugt Bestandteil einer mit den Fign. 15 und 16 veranschaulichten Kupplungsscheibe 20 einer Kupplung in Form einer Reibkupplung. Die Fliehkraftpendeleinrichtung 1 ist drehfest mit einer Nabe 27 der Kupplungsscheibe 20 verbunden. Die Nabe 27 ist weiter mit einem Reibelement 28 der Kupplungsscheibe 20 drehfest verbunden. Auch kann die Fliehkraftpendeleinrichtung 1 gemäß weiteren Ausführungen mit einem Flansch / Flanschbereich der Kupplungsscheibe 20 drehfest verbunden sein. Die der Übersichtlichkeit halber nicht weiter dargestellte Kupplung ist auf typische Weise in einem Antriebsstrang eines Kraftfahrzeuges, nämlich zwischen einer Ausgangswelle einer Verbrennungskraftmaschine und einer Eingangswelle eines Getriebes, eingesetzt. Die Fliehkraftpendeleinrichtung 1 ist folglich im Betrieb Teil des Antriebsstranges des Kraftfahrzeuges. Alternativ, gemäß weiteren Ausführungen, ist die Fliehkraftpendeleinrichtung 1 auch direkt an einer Triebwelle des Antriebsstranges, wie der Ausgangswelle der Verbrennungskraftmaschine oder der Getriebeeingangswelle, drehfest angebracht. Die Fliehkraftpendeleinrichtung 1 dient in ihrem Betrieb auf typische Weise dazu, eine in dem Antriebsstrang, insbesondere eine seitens der Verbrennungskraftmaschine erzeugte Drehungleichförmigkeit auszugleichen. Hierzu weist die Fliehkraftpendeleinrichtung 1 den aus der DE 10 2014 211 711 A1 bekannten grundlegenden Aufbau auf.

Die Fliehkraftpendeleinrichtung 1 weist nach Fig. 2 einen Träger 3 auf, der auch als Pendelflansch / Trägerflansch bezeichnet ist. Der Träger 3 ist aus zwei in axialer Richtung beabstandet zueinander gehaltenen Trägerbereichen 9a, 9b aufgebaut. Die beiden Trägerbereiche 9a und 9b sind jeweils als Pendelflansch / Flanschbereich bezeichnet. Jeder Trägerbereich 9a und 9b ist im Wesentlichen scheibenförmig ausgebildet. Der Träger 3 ist um eine Drehachse 2 rotierbar angeordnet. Die Drehachse 2 ist im Betrieb vorzugsweise koaxial mit der Ausgangswelle der Verbrennungskraftmaschine / Getriebeeingangswelle angeordnet. Die beiden Trägerbereiche 9a und 9b sind über Abstandsbolzen 14 drehfest miteinander verbunden. Die Abstandsbolzen 14 legen zudem einen axialen Abstand (entlang der Drehachse 2) der beiden Trägerbereiche 9a und 9b relativ zueinander fest. In Umfangsrichtung des Trägers 3 (in Bezug auf die Drehachse 2) sind mehrere Abstandsbolzen 14 verteilt angeordnet (Fig. 1). Die Abstandsbolzen 14 sind in dem jeweiligen Trägerbereich 9a, 9b vernietet, d.h. kraft- und formschlüssig mit dem Trägerbereich 9a, 9b verbunden.

In dem durch die Trägerbereiche 9a, 9b gebildeten (axialen) Innenraum 15 des Trägers 3 sind mehrere (drei) in Umfangsrichtung verteilt angeordnete Pendelmassen 5 relativ zu dem Träger 3 bewegbar / pendelbar angeordnet. Wie in der Ansicht nach Fig. 1 zu einer Vorderseite der Fliehkraftpendeleinrichtung 1 zu erkennen, weist jede Pendelmasse 5 zwei Führungsbolzen 16 auf, die jeweils in Kulissenbahnen 4 des Trägers 3 hinein ragen. Je Führungsbolzen 16 einer Pendelmasse 5 weist sowohl der erste Trägerbereich 9a als auch der zweite Trägerbereich 9b eine Kulissenbahn 4 auf (in Fig. 1 und Fig. 15 für den ersten Trägerbereich 9a repräsentativ dargestellt). Die einem Führungsbolzen 16 zugeordneten Kulissenbahnen 4 der beiden Trägerbereiche 9a, 9b bilden jeweils eine Führungskulisse für diesen Führungsbolzen 16 aus. Die Kulissenbahnen 4 erstrecken sich in Umfangsrichtung betrachtet gebogen (d.h. sowohl in Umfangsrichtung als auch in radialer Richtung). Insbesondere erstrecken sich die Kulissenbahnen 4 jeweils U-förmig in Umfangsrichtung. Somit führt die Pendelmasse 5 im Betrieb bei einer auftretenden Drehungleichförmigkeit auf gewohnte Weise eine Pendelbewegung durch, welche Pendelbewegung ein der Drehungleichförmigkeit entgegen gerichtetes Rückstellmoment erzeugt.

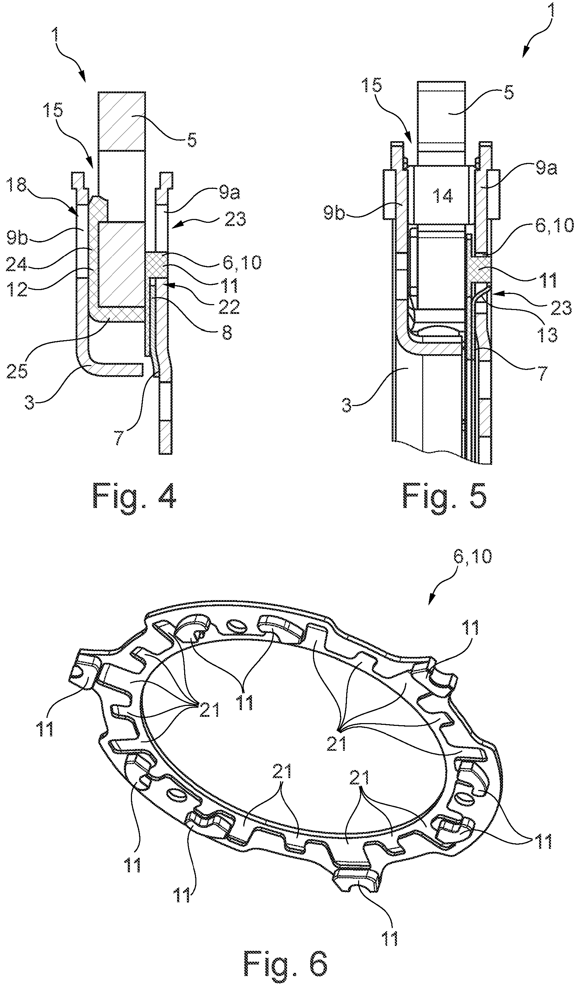

Zwischen der jeweiligen Pendelmasse 5 und dem Träger 3 wirkt eine Reibeinrichtung 18, wie in den Fign. 2 und 4 gut zu erkennen. Die Reibeinrichtung 18 weist ein Kontaktelement 6 auf. Das Kontaktelement 6 ist prinzipiell so eingesetzt, dass es bei einer Relativbewegung zwischen der Pendelmasse 5 und dem Träger 3, d.h. bei einer pendelnden Bewegung der Pendelmasse 5 im Betrieb entlang der Kulissenbahnen 4, zur Erzeugung eines auf die Bewegung hemmend wirkenden Reibwiderstandes kommt.

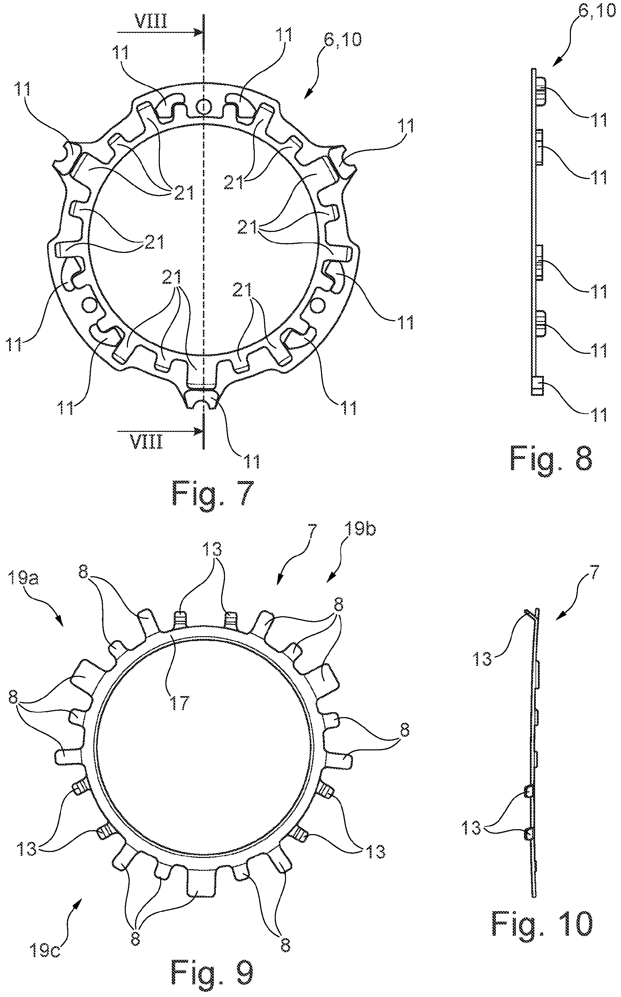

In dem ersten Ausführungsbeispiel, wie bspw. in Fig. 4 zu erkennen, ist das Kontaktelement 6 unmittelbar als ein Reibelement 10 ausgebildet. Das Kontaktelement 6 ist gesamtheitlich ringförmig ausgebildet (Fign. 6 und 7). Das Kontaktelement 6 liegt an einer axialen Stirnseite jeder Pendelmasse 5 unmittelbar an. Das Kontaktelement 6 ist mit seiner an der jeweiligen Pendelmasse 5 anliegenden Fläche gezielt zur Ausbildung eines Reibwiderstandes / Reibkontaktes mit der Pendelmasse 5 ausgebildet. Die Pendelmasse 5 ist durch ihre Führung seitens der Kulissenbahnen 4 in Umfangsrichtung sowie in radialer Richtung der Drehachse 2 relativ zu dem Kontaktelement 6 verschiebbar. Dadurch kommt es zur Erzeugung einer Reibkraft im Betrieb.

Zur drehfesten Abstützung des Kontaktelementes 6 relativ zu dem Träger 3 weist das Kontaktelement 6 auf einer der Pendelmasse 5 axial abgewandten Seite mehrere axial abstehende Haltenasen 11 in Form von Vorsprüngen auf (Fig. 8). Diese Haltenasen 11 ragen in Fenster 23 / Aussparungen in dem ersten Trägerbereich 9a hinein und sind in diesem mittels Formschlusses in Umfangsrichtung / Drehrichtung gesichert.

Das Kontaktelement 6 ist axial mittels einer als Tellerfeder 7 ausgebildeten Federscheibe an die Pendelmasse 5 angedrückt. Die Tellerfeder 7, die auch in Verbindung mit den Fign. 9 bis 11 alleine veranschaulicht ist, weist prinzipiell einen ringförmigen Grundabschnitt / Ringabschnitt 17 auf, von dem aus mehrere Federzungen 8 in radialer Richtung nach außen abstehen. Je Pendelmasse 5 sind an der Tellerfeder 7 mehrere sich hinsichtlich ihrer Länge (Erstreckung in radialer Richtung) sowie Breite (Erstreckung in Umfangsrichtung) unterscheidende Federzungen 8 vorgesehen. Insgesamt sind je Pendelmasse 5 eine Gruppe 19a bis 19c an Federzungen 8 an der Tellerfeder 7 vorgesehen. Eine erste Gruppe 19a ist in Umfangsrichtung versetzt zu einer zweiten Gruppe 19b sowie einer dritten Gruppe 19c angeordnet. Durch die Ausbildung der verschiedenen Gruppen 19a bis 19c an Federzungen 8 ist im Betrieb jeder Pendelmasse 5 eine Gruppe 19a bis 19c zugeordnet, mittels der das Kontaktelement 6 an dieser Pendelmasse 5 angedrückt ist.

Jede Federzunge 8 greift in eine korrespondierende, stirnseitig geöffnete Ausnehmung 21 des Kontaktelementes 6 ein. Die Ausnehmungen 21 sind in den Figuren 6 und 7 gut zu erkennen und auf einer den Pendelmassen 5 axial abgewandten Seite des Kontaktelementes 6 angeordnet. Dadurch ist die Tellerfeder 7 auch drehfest relativ zu dem Kontaktelement 6 abgestützt.

Die Tellerfeder 7 ist unmittelbar in axialer Richtung, wie bspw. in Fig. 4 gut zu erkennen, axial zwischen dem Kontaktelement 6 und dem ersten Trägerbereich 9a angeordnet. Hierzu ist insbesondere ein (axialer) Spalt 22 zwischen dem Kontaktelement 6 und dem ersten Trägerbereich 9a vorgesehen, in den die Tellerfeder 7 teilweise, nämlich mit ihren Federzungen 8 von einer radialen Innenseite aus hineinragt.

In Verbindung mit Fig. 5 ist auch zu erkennen, dass die Tellerfeder 7 ebenfalls verdrehgesichert relativ zu dem Träger 3 angeordnet ist. Hierzu weist die Tellerfeder 7 Haltelaschen 13 auf. Die Haltelaschen 13 erstrecken sich sowohl in radialer Richtung als auch in axialer Richtung von dem Ringabschnitt 17 aus weg und ragen ebenfalls in Fenster 23 des Trägers 3 hinein. Dadurch kommt es zu einer formschlüssigen Verdrehsicherung der Tellerfeder 7 relativ zu dem Träger 3 in Bezug auf die Drehachse 2. Die Haltelaschen 13 sind in Umfangsrichtung gesehen zwischen den jeweiligen Gruppen 19a bis 19c der Federzungen 8 angeordnet. Zwischen jeder Gruppe 19a bis 19c sind jeweils zwei Haltelaschen 13 ausgebildet.

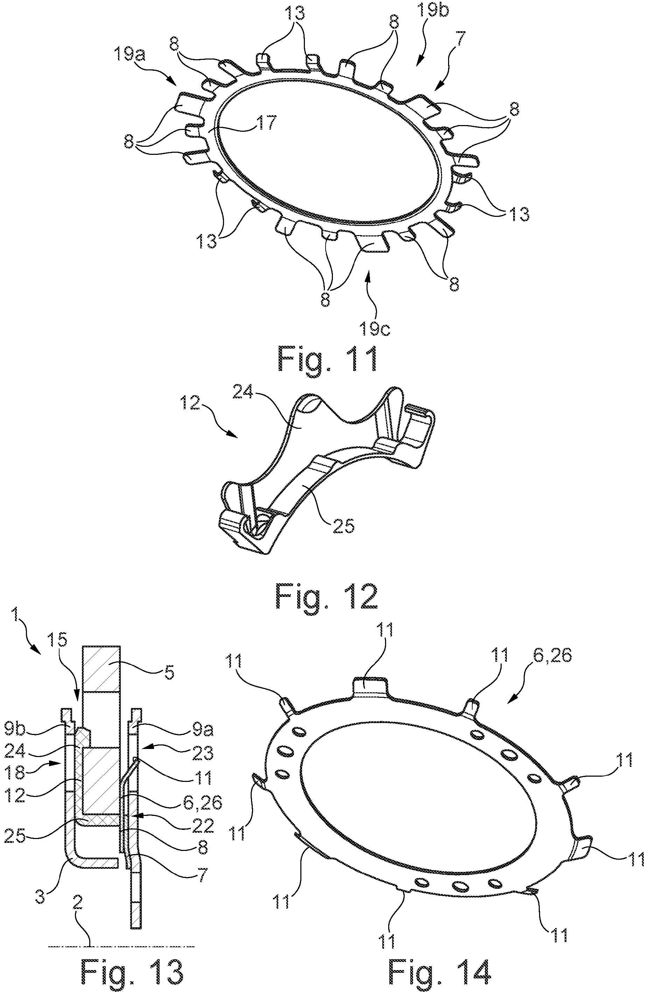

Zusätzlich weist die Reibeinrichtung 18 in dieser Ausführung einen Reibbestandteil 12 auf. Der Reibbestandteil 12 ist im Wesentlichen kappenartig ausgeformt und auf die Pendelmasse 5 aufgeschnappt. Dies bedeutet, dass der Reibbestandteil 12 formschlüssig an der Pendelmasse 5 fest angebracht ist. Der Reibbestandteil 12 ist in Fig. 12 alleine gut zu erkennen. Der Reibbestandteil 12 umgibt die Pendelmasse 5 von ihrer dem Kontaktelement 6 / der Tellerfeder 7 axial abgewandten Seite sowie ihrer radialen Innenseite. Zudem ist der Reibbestandteil 12 in dieser Ausführung bevorzugt auch in axialer Richtung an dem Kontaktelement 6 abgestützt. Der Reibbestandteil 12 weist folglich einen sich in radialer Richtung erstreckenden ersten Reibbereich 24 auf, der axial zwischen dem zweiten Trägerbereich 9b und der Pendelmasse 5 eingespannt ist. Ein zweiter Reibbereich 25 des Reibbestandteils 12 erstreckt sich in axialer Richtung von dem ersten Reibbereich 24 weg hin zu dem Kontaktelement 6. Der zweite Reibbereich 25 ist an der radialen Innenseite der Pendelmasse 5 abgestützt. Zudem ist der zweite Reibbereich 25 mit seiner dem ersten Reibbereich 24 axial abgewandten Seite reibkraftschlüssig mit dem Kontaktelement 6 in Kontakt.

Durch die Vorspannung des Kontaktelementes 6 von dem ersten Trägerbereich 9a weg hin zu der Pendelmasse 5 ist der Reibbestandteil 12 zwischen der Pendelmasse 5 und dem zweiten Trägerbereich 9b eingespannt. Dadurch kommt es auch seitens des Reibbestandteils 12 im Betrieb zu einem definierten Reibkontakt zwischen der Reibeinrichtung 18 und dem Träger 3. Da der Reibbestandteil 12 fest mit der Pendelmasse 5 verbunden ist, kommt es im Betrieb auch zu einem Reibkontakt zwischen dem Kontaktelement 6 und dem Reibbestandteil 12.

In dieser Ausführung ist das Kontaktelement 6 bevorzugt aus einem Kunststoffmaterial hergestellt.

In den Fign. 13 und 14 ist ein zweites Ausführungsbeispiel der erfindungsgemäßen Fliehkraftpendeleinrichtung 1 veranschaulicht, wobei dieses zweite Ausführungsbeispiel in Aufbau und Funktion weitestgehend dem ersten Ausführungsbeispiel entspricht. Der Kürze wegen sind nachfolgend lediglich die wesentlichen Unterschiede des zweiten Ausführungsbeispiels gegenüber dem ersten Ausführungsbeispiel beschrieben.

Das Kontaktelement 6 ist in dieser Ausführung als Stützelement 26 ausgeführt. Das Kontaktelement 6 dient vorzugsweise lediglich zum axialen Andrücken der Pendelmasse 5 samt dem Reibbestandteil 12 an dem zweiten Trägerbereich 9b. In diesem Ausführungsbeispiel ist das Stützelement 26 aus einem Metallblech ausgeformt.

In einem weiteren Ausführungsbeispiel, das hier der Übersichtlichkeit halber nicht weiter dargestellt ist, ist es prinzipiell auch möglich, zwei gemäß dem Kontaktelement 6 des ersten Ausführungsbeispiels ausgebildete Kontaktelemente 6 in der Fliehkraftpendeleinrichtung 1 einzusetzen, wobei ein erstes Kontaktelement 6 gemäß dem Kontaktelement 6 des ersten Ausführungsbeispiels angeordnet ist und ein zweites Kontaktelement 6 dann auf einer dem ersten Kontaktelement 6 axial abgewandten zweiten axialen Seite der Pendelmasse 5 (zwischen dem zweiten Trägerbereich 9b und der Pendelmasse 5) angeordnet ist. Beide Kontaktelemente 6 sind dann weiter bevorzugt wiederum drehfest relativ zum Träger 3 gesichert.

In anderen Worten ausgedrückt, ist erfindungsgemäß eine Tellerfeder 7 als Kraftquelle für eine Reibeinrichtung 18 verwendet. Da die Federkraft auf mehrere Krafteinleitungszungen (Federzungen 8) pro Pendelmasse 5 verteilt wird, wird die Flächenpressung gegenüber dem Stand der Technik deutlich reduziert. Außerdem bietet ein System mit einseitiger Feder 7 einen Vorteil für den axialen Bauraum bei einem fest definierten Abstand zwischen zwei Fliehkraftpendel-Flanschen (Trägerbereiche 9a, 9b), da nur eine Feder 7 eingebaut wird.

Erfindungsgemäß ist Fliehkraftpendel 1 mit Reibeinrichtung 18 realisiert, wobei eine Tellerfeder 7 vom Träger 3 aus eine Kraft auf ein Reibelement oder Kontaktelement 6, vorzugsweise aus Kunststoff, ausübt, welches zwischen Pendelmasse 5 und Tellerfeder 7 angeordnet ist, wobei das Reibelement 6 trägerfest ist, so dass bei einer Bewegung der Pendelmassen 5 relativ zum Träger 3 eine konstante Reibkraft gegen die Bewegungsrichtung entsteht. Die Tellerfeder 7 ist an der (axialen) Seite der Pendelmasse 5 angeordnet, an der das Fliehkraftpendel 1 einen axialen Spalt 22 zwischen zwei Trägern (Trägerbereiche 9a, 9b) aufweist. Die Tellerfeder 7 ragt in den Spalt 2 zum Teil radial hinein. Zwischen der Tellerfeder 7 und der Pendelmasse 5 ist bevorzugt ein ringförmiger Reibring (Reibelement 10), vorzugsweise aus Kunststoff, trägerfest angeordnet. Auf der zur Tellerfeder 7 abgewandten (axialen) Seite der Pendelmasse 5 ist ein zweites Reibelement (Reibbestandteil 12) angeordnet, der an der Pendelmasse 5 angebracht ist und sie teilweise umhüllt. Die Tellerfeder 7 weist axial hinausragende Elemente (Haltelaschen 13) auf, die in den Flansch (erster Trägerbereich 9a) eingehängt werden können, und die zum Positionieren und zur Kraftübertragung verwendet werden können. Die Tellerfeder 7 weist mehr als eine Krafteinleitungszunge (Federzunge 8) pro Pendelmasse 5 auf. Die Tellerfeder 7 weist weiter bevorzugt Krafteinleitungszungen 8 unterschiedlicher Länge auf. Auch der Reibring 10 weist vorzugsweise axial hinausragende Elemente (Haltenasen 11) auf, die in den Flansch 9a eingehängt sind, und die zum Positionieren und zur Kraftübertragung verwendet werden. Der Reibring 6 besteht weiter bevorzugt aus Blech.

Insbesondere sind im Wesentlichen folgende drei bevorzugte Ausführungen der Fliehkraftpendeleinrichtung 1 umgesetzt.

### Ausführung 1:

Die Reibeinrichtung 18 im Fliehkraftpendel 1 hat die Funktion die hohen Schwingwinkel der Pendelmasse 5 zu reduzieren. Als Energiespeicher/Kraftquelle wird hier eine Tellerfeder 7 verwendet. Die Tellerfeder 7 ist zwischen Pendelmasse 5 und dem flacheren der beiden Flansche (erster Trägerbereich 9a (geringere axiale Erstreckung als zweiter Trägerbereich 9b)) angeordnet und ragt radial nach innen in den Spalt 22 zwischen den zwei Flanschen 9a, 9b hinein. Es bietet sich an, diesen Platz zu nutzen, um eine für die Funktion optimale Federkennlinie zu erreichen. Die Tellerfeder 7 weist mehrere Außenzungen 8, 13 auf. Die stärker gebogenen Außenzungen 13 haben die Funktion, die Tellerfeder 7 im Fliehkraftpendel 1 zu zentrieren, die Positionierung der Tellerfeder 7 bei Fliehkraftpendel-Montage und die Kraftübertragung in Umfangsrichtung auf den Flansch 9a. Die nur leicht gebogenen Zungen 8 übertragen die Federkraft über den Reibring 6, 10 auf die einzelne Pendelmasse 5. Die Kraftauflagezungen 8 haben unterschiedlichen Längen und Breiten. Die Geometrie der Kraftauflagezungen 8 ist so gewählt, um eine gleichmäßige Aufteilung der Flächenpressung in allen Extremlagen der Pendelmasse 5 zu erhalten, sprich in der Mitte und voll ausgelenkt.

Der Reibring 6, 10 weist axial hinausragende Elemente 11 zum Positionieren im Flansch 94 auf. Auf der zur Tellerfeder 7 abgewandten Seite der Pendelmasse 5 sitzt ein weiteres Reibelement 12, jeweils eines pro Pendelmasse 5. Dieses liegt auf dem getopften Flansch (zweiter Trägerbereich 9b) auf. Das zweite Reibelement 12 ist fest an der Pendelmasse 5 montiert.

### Ausführung 2:

Eine weitere denkbare Variante wäre, dass der Reibring 6 aus Blech ist, bzw. als eine Stützscheibe (Stützelement 26) ausgeführt ist.

### Ausführung 3:

Eine weitere denkbare Variante wäre, dass auf beiden Seiten der Pendelmasse 5 ein ringförmiger Reibring 6, 10 angeordnet ist.

### Bezugszeichenliste

- 1: Fliehkraftpendeleinrichtung
- 2: Drehachse
- 3: Träger
- 4: Kulissenbahn
- 5: Pendelmasse
- 6: Kontaktelement
- 7: Tellerfeder
- 8: Federzunge
- 9a: erster Trägerbereich
- 9b: zweiter Trägerbereich
- 10: Reibelement
- 11: Haltenase
- 12: Reibbestandteil
- 13: Haltelasche
- 14: Abstandsbolzen
- 15: Innenraum
- 16: Führungsbolzen
- 17: Ringabschnitt
- 18: Reibeinrichtung
- 19a: erste Gruppe an Federzungen
- 19b: zweite Gruppe an Federzungen
- 19c: dritte Gruppe an Federzungen
- 20: Kupplungsscheibe
- 21: Ausnehmung
- 22: Spalt
- 23: Fenster
- 24: erster Reibbereich
- 25: zweiter Reibbereich
- 26: Stützelement
- 27: Nabe
- 28: Reibelement der Kupplungsscheibe

## Patentansprüche

1. Fliehkraftpendeleinrichtung (1) für einen Antriebsstrang eines Kraftfahrzeuges, mit einem um eine Drehachse (2) drehbaren Träger (3), einer an dem Träger (3) entlang einer Kulissenbahn (4) pendelbar aufgenommenen Pendelmasse (5), wobei durch die Pendelmasse (5) im Betrieb ein einer Drehungleichförmigkeit entgegen gerichtetes Rückstellmoment erzeugt ist, einem an der Pendelmasse (5) anliegenden Kontaktelement (6), welches Kontaktelement (6) eingesetzt ist, einen eine Relativbewegung zwischen der Pendelmasse (5) und dem Träger (3) hemmenden Reibwiderstand zu erzeugen, sowie einer das Kontaktelement (6) in einer axialen Richtung der Drehachse (2) zu der Pendelmasse (5) hin vorspannenden Federscheibe (7), wobei die Federscheibe (7) als eine mit mehreren Federzungen (8) ausgestattete Tellerfeder (7) ausgebildet ist, **dadurch gekennzeichnet, dass** die Tellerfeder (7) in einem Umfangsbereich der Pendelmasse (5) mit den Federzungen (8) an dem Kontaktelement (6) anliegt.

2. Fliehkraftpendeleinrichtung (1) nach Anspruch 1, **dadurch gekennzeichnet, dass** die Tellerfeder (7) in axialer Richtung der Drehachse (2) gesehen zwischen einem ersten Trägerbereich (9a) des Trägers (3) und der Pendelmasse (5) angeordnet ist.

3. Fliehkraftpendeleinrichtung (1) nach Anspruch 1 oder 2, **dadurch gekennzeichnet, dass** sich die Federzungen (8) zumindest teilweise in ihrer Breite und/oder Länge unterscheiden.

4. Fliehkraftpendeleinrichtung (1) nach einem der Ansprüche 1 bis 3, **dadurch gekennzeichnet, dass** das Kontaktelement (6) als Reibelement (10) ausgebildet ist.

5. Fliehkraftpendeleinrichtung (1) nach einem der Ansprüche 1 bis 4, **dadurch gekennzeichnet, dass** das Kontaktelement (6) mehrere in axialer Richtung vorspringende Haltenasen (11) aufweist, die unter drehfester Anordnung des Kontaktelementes (6) relativ zu dem Träger (3) an dem Träger (3) abgestützt sind.

6. Fliehkraftpendeleinrichtung (1) nach einem der Ansprüche 1 bis 5, **dadurch gekennzeichnet, dass** ein mit dem Kontaktelement (6) in Wirkverbindung stehender Reibbestandteil (12) an der Pendelmasse (5) angebracht ist und an einem zweiten Trägerbereich (9b) des Trägers (3) anliegt.

7. Fliehkraftpendeleinrichtung (1) nach einem der Ansprüche 1 bis 5, **dadurch gekennzeichnet, dass** die Tellerfeder (7) Haltelaschen (13) aufweist, die unter drehfester Anordnung der Tellerfeder (7) relativ zu dem Träger (3) an einem trägerfesten Bestandteil (9a) abgestützt sind.

8. Kupplungsscheibe (20) für eine Reibkupplung eines Kraftfahrzeuges, mit einer Fliehkraftpendeleinrichtung (1) nach einem der Ansprüche 1 bis 7 sowie einem mit dem Träger (3) drehfest verbundenen Reibelement (10).

9. Antriebsstrang für ein Kraftfahrzeug, mit einer Fliehkraftpendeleinrichtung (1) nach einem der Ansprüche 1 bis 7, wobei der Träger (3) mit einer Triebwelle drehfest verbunden ist.

## Claims

1. A centrifugal pendulum device (1) for a powertrain of a motor vehicle, having a support (3), which is rotatable about an axis of rotation (2), a pendulum mass (5), which is held on the support (3) such that it can swing along a guide path (4), wherein the pendulum mass (5) generates, during operation, a restoring torque which is directed against a rotational irregularity, a contact element (6), which bears against the pendulum mass (5), which contact element (6) is inserted to generate a frictional resistance inhibiting a relative movement between the pendulum mass (5) and the support (3), and a spring disc (7) biasing the contact element (6) in an axial direction of the axis of rotation (2) towards the pendulum mass (5), wherein the spring disc (7) is designed as a diaphragm spring (7) equipped with a plurality of spring tongues (8), **characterised in that** the diaphragm spring (7) bears against the contact element (6) in a circumferential region of the pendulum mass (5) with the spring tongues (8).

2. The centrifugal pendulum device (1) according to claim 1, **characterised in that** the diaphragm spring (7) is arranged between a first support region (9a) of the support (3) and the pendulum mass (5) as viewed in the axial direction of the axis of rotation (2).

3. The centrifugal pendulum device (1) according to claim 1 or 2, **characterised in that** the spring tongues (8) differ at least partially in their width and/or length.

4. The centrifugal pendulum device (1) according to any one of claims 1 to 3, **characterised in that** the contact element (6) is designed as a friction element (10).

5. The centrifugal pendulum device (1) according to any one of claims 1 to 4, **characterised in that** the contact element (6) has a plurality of retaining lugs (11) projecting in the axial direction, which are supported on the support (3) with the contact element (6) being arranged in a rotationally fixed manner relative to the support (3).

6. The centrifugal pendulum device (1) according to any one of claims 1 to 5, **characterised in that** a friction component (12) operatively connected to the contact element (6) is attached to the pendulum mass (5) and bears against a second support region (9b) of the support (3).

7. The centrifugal pendulum device (1) according to any one of claims 1 to 5, **characterised in that** the diaphragm spring (7) has retaining lugs (13) which are supported on a component (9a) fixed to the support while the diaphragm spring (7) is arranged in a rotationally fixed manner relative to the support (3).

8. A clutch plate (20) for a friction clutch of a motor vehicle, having a centrifugal pendulum device (1) according to any one of claims 1 to 7, as well as a friction element (10), which is connected to the support (3) in a non-rotatable manner.

9. A powertrain for a motor vehicle, having a centrifugal pendulum device (1) according to any one of claims 1 to 7, wherein the support (3) is connected to a drive shaft in a non-rotatable manner.

## Revendications

1. Dispositif pendulaire à force centrifuge (1) destiné à une chaîne cinématique d'un véhicule automobile, comportant un support (3) pouvant tourner autour d'un axe de rotation (2), une masse pendulaire (5) logée de manière pendulaire sur le support (3) le long d'une voie de coulisse (4), la masse pendulaire (5) générant en fonctionnement un couple de rappel dirigé à l'encontre d'une irrégularité de rotation, un élément de contact (6) venant en appui sur la masse pendulaire (5), lequel élément de contact (6) est inséré, pour générer une résistance à la friction inhibant un mouvement relatif entre la masse pendulaire (5) et le support (3), ainsi qu'une rondelle élastique (7) qui précontraint l'élément de contact (6) dans une direction axiale de l'axe de rotation (2) vers la masse pendulaire (5), la rondelle élastique (7) étant réalisée sous la forme d'une rondelle Belleville (7) équipée de plusieurs languettes élastiques (8), **caractérisé en ce que** la rondelle Belleville (7) vient en appui dans une zone périphérique de la masse pendulaire (5), grâce aux languettes élastiques (8), sur l'élément de contact (6).

2. Dispositif pendulaire à force centrifuge (1) selon la revendication 1, **caractérisé en ce que** la rondelle Belleville (7) est agencée, vue dans la direction axiale de l'axe de rotation (2), entre une première zone (9a) de support du support (3) et la masse pendulaire (5).

3. Dispositif pendulaire à force centrifuge (1) selon la revendication 1 ou 2, **caractérisé en ce que** les languettes élastiques (8) se distinguent au moins partiellement par leur largeur et/ou leur longueur.

4. Dispositif pendulaire à force centrifuge (1) selon l'une quelconque des revendications 1 à 3, **caractérisé en ce que** l'élément de contact (6) est réalisé comme un élément de friction (10).

5. Dispositif pendulaire à force centrifuge (1) selon l'une quelconque des revendications 1 à 4, **caractérisé en ce que** l'élément de contact (6) présente plusieurs ergots de retenue (11) faisant saillie dans la direction axiale, qui sont en appui sur le support (3) lorsque l'élément de contact (6) est agencé solidaire en rotation par rapport au support (3).

6. Dispositif pendulaire à force centrifuge (1) selon l'une quelconque des revendications 1 à 5, **caractérisé en ce qu'**un composant de friction (12) en liaison active avec l'élément de contact (6) est monté sur la masse pendulaire (5) et vient en appui sur une seconde zone (9b) de support du support (3).

7. Dispositif pendulaire à force centrifuge (1) selon l'une quelconque des revendications 1 à 5, **caractérisé en ce que** la rondelle Belleville (7) présente des pattes de retenue (13) qui viennent en appui sur un composant (9a) solidaire du support lorsque la rondelle Belleville (7) est agencée solidaire en rotation par rapport au support (3).

8. Disque d'embrayage (20) pour un embrayage à friction d'un véhicule automobile, comportant un dispositif pendulaire à force centrifuge (1) selon l'une quelconque des revendications 1 à 7 ainsi qu'un élément de friction (10) raccordé solidaire en rotation au support (3).

9. Chaîne cinématique pour un véhicule automobile, comportant un dispositif pendulaire à force centrifuge (1) selon l'une quelconque des revendications 1 à 7, dans laquelle le support (3) est relié solidaire en rotation à un arbre d'entraînement.
